# EUROPÄISCHE PATENTSCHRIFT

(11) **EP 3 837 205 B1**
(45) Veröffentlichungstag und Bekanntmachung des Hinweises auf die Patenterteilung: **18.02.2026**
(21) Anmeldenummer: 19752126.3
(22) Anmeldetag: 30.07.2019
(51) Int. Cl.: B66C 1/66, F16G 15/08

(54) **ANSCHLAGVORRICHTUNG MIT SCHNAPPMECHANISMUS**
COUPLING DEVICE WITH SNAP MECHANISM
DISPOSITIF D'ACCROCHAGE AVEC MÉCANISME D'ACCOUPLEMENT

(30) Priorität: 16.08.2018 DE 102018213827
(43) Veröffentlichungstag der Anmeldung: 23.06.2021
(73) Patentinhaber: RUD Ketten Rieger & Dietz GmbH u. Co. KG, 73432 Aalen (DE)
(72) Erfinder: BETZLER, Michael, 73453 Abtsgmünd (DE); HAAS, Simon, 73571 Göggingen-Horn (DE)
(74) Vertreter: Grünecker Patent- und Rechtsanwälte PartG mbB
(86) Internationale Anmeldenummer: PCT/EP2019/070410
(87) Internationale Veröffentlichungsnummer: WO 2020/035299

(56) Entgegenhaltungen:
- EP-A2- 1 840 070
- WO-A1-2012/152911
- WO-A1-2017/125492
- AT-B- 412 269
- DE-C2- 3 301 960
- DE-U1- 202004 003 237
- DE-U1- 202012 103 405

## Beschreibung

Die Erfindung betrifft eine Anschlagvorrichtung mit einem Sockelteil zur Anbringung an einem Gegenstand, wie einer Last oder einer Ladefläche, und mit einem am Sockelteil um eine Schwenkachse schwenkbar gegenüber dem Sockelteil gehaltenen Anschlussteil, wobei das Sockelteil eine Auflagefläche zur Auflage an dem Gegenstand und das Anschlussteil eine Öffnung zum Anschlagen eines Anschlag-, Hebe-, Zurr- oder Spannmittels aufweist wobei in Schnappmechanismus vorgesehen ist.

Derartige Anschlagvorrichtungen sind bekannt. Die WO 2017/125492 A1 betrifft einen Hebepunkt zum Heben von Lasten, der einen schwenkbaren Körper in Kombination mit einer Hakenschlaufe, die mit einem Hebezubehör in Eingriff gebracht werden kann, und ein Befestigungselement zum Befestigen des Hebepunkts an einer Last umfasst, wobei das Befestigungselement und der schwenkbare Körper durch eine Schwenkverbindung verbunden sind, die es dem Körper ermöglicht, relativ zum Befestigungselement um eine Achse zu schwenken. Die Abschnitte des Befestigungselements und des schwenkbaren Körpers, die in die Drehverbindung eingreifen, sind jeweils aus einem einzigen Teil gefertigt, um eine permanente Verbindung zu bilden, wobei der eine und/oder der andere dieser Abschnitte durch additive Fertigung aus Metall hergestellt wird. Die EP 1 840 070 A2 zeigt eine Anschlussvorrichtung zur Befestigung eines Anschlag- oder Verzurrmittels an einem zu transportierenden oder zu verzurrenden Gegenstand mit einem Befestigungsteil zur Befestigung an dem Gegenstand und einem Anschlussteil mit einer Anschlussöse für das Anschlag- oder Verzurrmittel sowie einem den Befestigungsteil und den Anschlussteil verbindenden Verbindungsteil. Der Anschlussteil ist in einer den Verbindungsteil durchsetzenden Halteöffnung der Anschlussvorrichtung drehbar gelagert und es ist eine Klemmfeder für den Anschlussteil vorgesehen, wobei der Verbindungsteil eine nach außen hin offene, an die Halteöffnung anschließende und von der Halteöffnung abgesetzte Mulde für die Klemmfeder aufweist, wobei die Klemmfeder den Anschlussteil nur in einem dem Befestigungsteil zugewandten Bereich berührt. Problematisch bei derartigen Anschlagvorrichtungen ist ein Umschlagen des Anschlussteils unter Last.

In der DE 33 01 960 C2 ist eine Anschlagvorrichtung gemäß dem Oberbegriff des Anspruchs 1 beschrieben, bei der das Befestigungsteil ein Lager für mindestens ein um eine Achse schwenk-und/oder drehbares Verankerungselement des Anschlussteils bildet. Das Verankerungselement wird durch mindestens eine Feder gegen eine Stützfläche des Lagers gedrückt, wobei das Anschlussteil mit zu seiner Arretierung in unterschiedlichen Positionen dienenden Rastflächen und/oder Rastnuten für die Feder versehen ist.

Die WO 2012/152911 A1 betrifft eine Vorrichtung zur Befestigung von Gepäckstücken mit einer Basis, die an einem Fahrzeug befestigt wird, und mit einer Schnalle/Öse, die um eine Achse schwenkbar an der Basis gehalten ist. Die Vorrichtung weist elastische Mittel auf, um die Öse in einer vorbestimmten Winkelposition zu halten.

Die DE 20 2012 103 405 U1 betrifft einen Anschlagpunkt mit einem Unterteil zum Anschließen an einem Gegenstand und ein mit dem Unterteil verbundenes Oberteil mit einem eine Öffnung einfassenden Bogenstück, in dessen Öffnung eine schwenkbar und verschiebbare Öse eingesetzt ist. In die Öffnung ragt ein Klemmelement, sodass die unbelastete Öse an einen dem Klemmelement gegenüberliegenden Abschnitt in der Öffnung gehalten und die unbelastete Öse auch in einer gegenüber der lotrechten verstellten Lage fixiert ist.

In der AT 412 269 B ist ein Fixierelement für eine zur Befestigung eines Anschlag- oder Verzurrmittels vorgesehene Anschlussöse einer Anschlussvorrichtung beschrieben.

Die DE 20 2004 003 237 U1 betrifft eine Vorrichtung zum Verzurren von Gepäckteilen in einem Kraftfahrzeug mit einem Sockel, der mit einem Karosserieteil des Kraftfahrzeugs fest verbunden ist, und mit einer Öse, die mittels eines Verbindungsteils an dem Sockel um eine Schwenkachse schwenkbar gelagert ist. Der Öse ist ein Feststellelement zugeordnet, um die Öse in einer vorgegebenen Halteposition zu fixieren.

Ein solches Umschlagen kann auftreten, wenn eine Belastung der Anschlagvorrichtung in einer nicht zulässigen Richtung auftritt. Wird beispielsweise die Anschlagvorrichtung bei stehendem Anschlussteil quer zur Ebene der Öffnung belastet, kann unter Umständen ein Verschwenken des Bügels erst verspätet, unter bereits hoher Belastung stattfinden; der Bügel schlägt um. Durch das Umschlagen entstehen Belastungsspitzen, die den Gegenstand, die Anschlagvorrichtung und/oder das Anschlag-, Hebe-, Zurr- und Spannmittel beschädigen können.

Der Erfindung liegt folglich die Aufgabe zugrunde, eine Anschlagvorrichtung zu schaffen, bei der diese Gefahr verringert ist.

Gelöst wird diese Aufgabe erfindungsgemäß für die eingangs genannte Anschlagvorrichtung dadurch, dass der Schnappmechanismus wenigstens eine Umschnappstelle entlang einer Schwenkbewegung des Anschlussteils um die Schwenkachse aufweist, wobei der Schnappmechanismus das Anschlussteil von der Umschnappstelle abweist und in Richtung der Schwenkbewegung vor der Umschnappstelle eine entgegen die Schwenkbewegung gerichtete Bremskraft erzeugt, welche Bremskraft in Richtung der Schwenkbewegung hinter der Umschnappstelle verringert ist, und dass an der Umschnappstelle das Anschlussteil im Wesentlichen senkrecht zur Auflagefläche ausgerichtet ist.

Durch einen derart ausgestalteten Schnappmechanismus wird verhindert, dass das Anschlussteil von sich aus eine Position an der Umschnappstelle einnehmen kann. Der Schnappmechanismus weist somit das Anschlussteil von der Umschnappstelle ab. An der Umschnappstelle kann somit das gefährliche Umschlagen des Anschlussteils nicht stattfinden. An der Umschnappstelle ist das Anschlussteil im Wesentlichen senkrecht zur Auflagefläche ausgerichtet. Bei einer derartigen Anordnung der Umschnappstelle kann das Umschlagen eines senkrecht zur Auflagefläche ausgerichteten Anschlussteils verhindert werden.

Die oben beschriebene Erfindung kann durch die folgenden, jeweils für sich vorteilhaften und beliebig miteinander kombinierbaren Merkmale weiter verbessert werden.

So kann gemäß einer vorteilhaften Ausgestaltung der Anschlagvorrichtung das Sockelteil um eine Drehachse drehbar, insbesondere um ein die Auflagefläche bildendes Teil, wie eine Innenbuchse, gelagert sein. Durch die zusätzlich zur Schwenkachse vorgesehene Drehachse lässt sich die Selbstausrichtung des Anschlussteils in Richtung der auf das Anschlussteil wirkenden Last weiter verbessern. Vorteilhaft verläuft dabei die Drehachse senkrecht zur Schwenkachse bzw. senkrecht zur Auflagefläche. Die Auflagefläche ist in so einem Fall von einem gegenüber dem Sockelteil drehbaren Element, beispielsweise der Innenbuchse, gebildet.

Die Bremskraft kann sich mit der Bewegung des Anschlussteils über die Umschnappstelle stetig oder unstetig verringern. Beispielsweise kann sich die Bremskraft mit Überschreiten der Umschnappstelle mit zunehmendem Abstand des Anschlussteils von der Umschnappstelle über wenigstens einen Bereich der Schwenkbewegung kontinuierlich verringern. In einer anderen Ausgestaltung kann sich mit Überschreiten der Umschnappstelle das Vorzeichen der Bremskraft ändern, also hinter der Umschnappstelle die Bremskraft in Richtung der Schwenkbewegung gerichtet sein. Gemäß einer anderen Variante kann hinter der Umschnappstelle die Bremskraft sprunghaft abnehmen, beispielsweise gleich oder nahe Null sein. Die oben genannten Varianten können auch beliebig miteinander kombiniert sein. So kann beispielweise mit Überschreiten der Umschnappstelle die Bremskraft zunächst ihr Vorzeichen ändern und anschließend auf Null oder einen Wert nahe Null zurückgehen.

Die Bremskraft weist bevorzugt auch eine Rückstellkraft auf. Die Rückstellkraft erzeugt dabei ein entgegen die Schwenkbewegung gerichtetes Rückstellmoment. Ferner kann die Bremskraft eine Reibkraft als Komponente aufweisen, wobei die Reibkraft durch Reibung erzeugt ist. Bei stillstehendem Anschlussteil dient die Bremskraft als Haltekraft, um das Anschlussteil in seiner Lage zu fixieren.

Gemäß einer weiteren vorteilhaften Ausgestaltung kann der Schnappmechanismus wenigstens einen sockelteilseitigen Abschnitt und wenigstens einen anschlussteilseitigen Abschnitt aufweisen, die bevorzugt zusammenwirken, um den Schnappvorgang zu erzeugen.

Um nicht größer als herkömmliche Anschlagvorrichtungen ohne Schnappmechanismus zu bauen, befindet sich bevorzugt der Schnappmechanismus zumindest teilweise in wenigstens einem Spalt zwischen dem Anschlussteil und dem Sockelteil. Ein solcher Spalt kann beispielsweise zwischen einem Schenkel des Anschlussteils und dem Sockelteil gebildet sein. Bei einer solchen Ausgestaltung kann sich das Sockelteil insbesondere zwischen den beiden Schenkeln befinden, so dass zwei Spalte vorhanden sind. Bei zwei Spalten kann der Schnappmechanismus zweiteilig ausgestaltet sein, wobei jeweils ein Teil in jeweils einem der beiden Spalte angeordnet ist. Die sich in den beiden Spalten befindenden Teile des Schnappmechanismus können zueinander symmetrisch, beispielsweise symmetrisch zu einer Mittenebene der Anschlagvorrichtung, wobei die Mittenebene insbesondere senkrecht zu der Schwenkachse ausgerichtet sein kann, oder rotationssymmetrisch, insbesondere rotationssymmetrisch um die Drehachse, ausgestaltet sein.

Um das Anschlussteil zuverlässig von der Umschnappstelle abzuweisen, kann gemäß einer weiteren vorteilhaften Ausgestaltung die entgegen der Schwenkbewegung gerichtete Bremskraft und/oder Rückstellkraft zumindest in einem Abschnitt vor der Umschnappstelle mit abnehmendem Abstand von der Umschnappstelle zunehmen. Je mehr sich folglich das Anschlussteil der Umschnappstelle nähert, umso größer ist die Antriebskraft, die benötigt wird, um das Anschlussteil in Richtung der Umschnappstelle zu bewegen. Somit ist es für das Anschlussteil schwerer, die Umschnappstelle zu erreichen.

Gemäß einer weiteren vorteilhaften Ausgestaltung kann der Schnappmechanismus wenigstens eine Federanordnung umfassen, die näher oder direkt an der Umschnappstelle stärker elastisch verformt ist als in einem Abstand von der Umschnappstelle in Schwenkrichtung. Die Federanordnung kann insbesondere ausgestaltet sein, das Umschnappen zu ermöglichen und die Bremskraft aufgrund der elastischen Verformung zu erzeugen.

Die Federanordnung kann sich am Sockelteil befinden, also sockelteilseitig angeordnet sein. Sie kann sich aber auch am Anschlussteil befinden, also anschlussteilseitig angeordnet sein. Die Federanordnung kann sich ferner, zumindest abschnittsweise in einen Spalt zwischen dem Sockelteil und dem Anschlussteil erstrecken. Sind mehrere Federanordnungen vorgesehen, so kann sich gemäß einer Weiterbildung, wenigstens eine Federanordnung am Sockelteil und wenigstens eine Federanordnung am Anschlussteil befinden. Der Schnappmechanismus kann mehrere Federanordnungen aufweisen.

Die Federanordnung kann wenigstens eine Feder aufweisen, die, insbesondere bei sockelteilseitiger Anordnung, das Sockelteil oder, insbesondere bei anschlussteilseitiger Anordnung, das Anschlussteil wenigstens teilweise umgreift. Durch das Umgreifen ist eine Befestigung der Feder möglich, ohne das jeweilige Teil konstruktiv zu schwächen. Die Feder kann bei einer derartigen Ausgestaltung als eine Bügelfeder oder eine Federklammer ausgestaltet sein.

Alternativ kann die Federanordnung ein federndes Druckstück aufweisen, beispielsweise einen Kugeldruckstift, einen Federbolzen oder einen Arretierstift, der in eine Öffnung eingesetzt wird.

Die Feder kann wenigstens an der Umschnappstelle, vorzugsweise auch vor und/oder hinter der Umschnappstelle in Richtung parallel zur Schwenkbewegung verformt sein, um die Rückstellkraft zu erzeugen. Alternativ oder zusätzlich kann die Feder senkrecht zur Schwenkbewegung verformt sein, um beispielweise eine entgegen der Schwenkbewegung gebildete Reibkraft zu erzeugen. Zur Erzeugung der Reibkraft drückt die elastisch verformte Federanordnung gegen eine gegenüberliegende Reibfläche.

Die Federanordnung kann, beispielweise bei sockelteilseitiger Anordnung, einen weg vom Sockelteil hin zum Anschlussteil oder, beispielweise bei anschlussteilseitiger Anordnung, einen weg vom Anschlussteil hin zum Sockelteil vorspringenden Abschnitt aufweisen. Der vorspringende Abschnitt kann, bei sockelteilseitiger Anordnung, zumindest an der Umschnappstelle mit dem Anschlussteil zusammenwirken. Bei anschlussteilseitiger Anordnung kann der vorspringende Abschnitt zumindest an der Umschnappstelle mit dem Sockelteil zusammenwirken.

Der vorspringende Abschnitt kann Teil der Feder, beispielweise ein von der Feder gebildeter Vorsprung sein. Alternativ kann der vorspringende Abschnitt auch von einem federnd gehaltenen Körper gebildet sein, der zwischen der sockelteilseitigen Federanordnung und dem Anschlussteil oder der anschlussteilseitigen Federanordnung und dem Sockelteil angeordnet ist. Bei einem Kugeldruckstift ist beispielsweise der solchermaßen federnd gehaltene Körper eine Kugel, bei einem Arretierstift ein Stift.

Bei einer Feder, die das Sockelteil um wenigstens 180° umgreift, können zwei sich diametral gegenüberliegende vorspringende Abschnitte vorhanden sein. So kann eine das Sockelteil umgreifende Feder zwei sich gegenüberliegende vorspringende Abschnitte aufweisen, die den sich von der Schwenkachse weg erstreckenden Schenkeln des Anschlussteils gegenüberliegen.

Um das Umschnappen zu bewirken, kann der Schnappmechanismus wenigstens einen Rastvorsprung aufweisen, der zumindest an der wenigstens einen Umschnappstelle der Federanordnung gegenüberliegt. An der wenigstens einen Umschnappstelle wirkt der Rastvorsprung mit der Federanordnung zusammen, beispielsweise in dem an der Umschnappstelle die Federanordnung im Zuge der Schwenkbewegung über den Rastvorsprung schnappt. Der Rastvorsprung kann Teil einer Reibfläche sein, gegen die die elastisch verformte Federanordnung zumindest abschnittsweise entlang der Schwenkbewegung anliegt, um die Reibkraft zu erzeugen.

Je nachdem, ob die Federanordnung am Anschlussteil oder am Sockelteil angeordnet ist, kann sich der wenigstens eine Rastvorsprung gegenüberliegend am Sockelteil oder Anschlussteil befinden. Bevorzugt springt der Rastvorsprung in Richtung parallel zur Schwenkachse oder senkrecht zur Schwenkachse vom Anschlussteil weg zum Sockelteil hin vor, wenn sich die Federanordnung am Sockelteil befindet, oder vom Sockelteil weg zum Anschlussteil hin vor, wenn sich die Federanordnung am Anschlussteil befindet. Der Rastvorsprung kann insbesondere in den Spalt zwischen Anschlussteil und Sockelteil vorspringen.

Bei bestimmten Anwendungen kann es erwünscht sein, dass sich entlang der Schwenkbewegung mehrere voneinander beabstandete Umschnappstellen befinden. Um dies zu verwirklichen, kann gemäß einer weiteren Ausgestaltung um die Schwenkachse herum eine Mehrzahl von Rastvorsprüngen angeordnet sein. Bevorzugt wirkt die Mehrzahl von Rastvorsprüngen mit jeweils einer einzigen Federanordnung zusammen, um den konstruktiven Aufwand gering zu halten.

Die Rastvorsprünge können gemäß einer weiteren Variante auch radial bezüglich der Schwenkachse außen von einer Achse oder einem Achsstummel des Anschlussteils weg vorspringen oder radial nach innen zum Anschlussteil bzw. dessen Achse oder Achsstummel hin vorspringen. In einer solchen Ausgestaltung wirken die Rastvorsprünge mit einer ebenfalls radial, also senkrecht zur Schwenkachse ausgerichteten Federanordnung zusammen.

Bevorzugt entsteht der Umschnappvorgang dadurch, dass zu der Umschnappstelle sich zwei Vorsprünge unter elastischer Auslenkung wenigstens eines der beiden Vorsprünge aneinander vorbei bewegen. Beim Umschnappen liegen an der wenigstens einen Umschnappstelle der Rastvorsprung und der vorspringende Abschnitt der Federanordnung, unter Auslenkung wenigstens der Federanordnung aneinander.

Auch der Rastvorsprung kann elastisch auslenkbar ausgestaltet sein. Er muss nicht notwendigerweise aus massivem bzw. starrem Material geformt sein. Beispielsweise kann der Rastvorsprung von einer Feder oder einem federnd gelagerten Körper gebildet sein.

Ist entlang der Schwenkbewegung wenigstens eine weitere Umschnappstelle vorgesehen, so ist bevorzugt an der wenigstens einen weiteren Umschnappstelle das Anschlussteil in einem spitzen Winkel oder wenigstens in etwa parallel zur Auflagefläche ausgerichtet. Bei einer solchen Ausgestaltung kann eine Umschnappstelle oder ein Paar von Umschnappstellen dazu verwendet werden, das Anschlussteil in einer bestimmten Position zu fixieren. Beispielweise kann das Anschlussteil zwischen einer Umschnappstelle und der Auflagefläche verrastet sein, um eine sichere Nicht-Gebrauchsstellung zu schaffen. In einer anderen Ausgestaltung kann das Anschlussteil zwischen zwei in Schwenkrichtung benachbarten Rastvorsprüngen verrastet sein. Gemäß einer anderen Ausgestaltung kann das Anschlussteil im Abstand von der Auflagefläche gehalten sein, um das Ergreifen des Anschlussteils von Hand oder das Einhängen eines Anschlag-, Hebe-, Zurr- oder Spannmittels zu erleichtern.

Eine Umschnappstelle kann schließlich auch als Bügelfallbremse verwendet werden, da die Bremskraft bei der Bewegung des Anschlussteils auf die Umschnappstelle zu das Fallen des Anschlussteils abbremst. Ist an einer Stelle die Bremskraft gleich oder größer als das Eigengewicht des Anschlussteils, so wird das Anschlussteil an dieser Stelle gehalten.

An wenigstens einer Flanke des Rastvorsprungs kann eine entgegen der Schwenkbewegung gerichtete Reibkraft erzeugt sein, beispielsweise durch Reibung zwischen der elastisch verformten Federanordnung und der Flanke. Wird die Bewegung gestoppt, weil die Bremskraft so groß wie oder größer als die Schwenkbewegung treibende Kraft ist, kann die Bremskraft als Haltekraft genutzt werden, um das Anschlussteil an der Position zu halten, an der die Schwenkbewegung gestoppt wurde. Die genaue Lage dieser Haltestelle an der Flanke des Rastvorsprungs hängt von der Größe der die Schwenkbewegung treibenden Kraft ab. Ein Haltepunkt kann sich jeweils zu einer Seite der Umschnappstelle befinden. Durch eine Auslenkung der Federanordnung parallel zu Schwenkrichtung und/oder durch eine Flanke, die außerhalb des Reibkegels verläuft, kann zudem eine Rückstellkraft erzeugt werden.

Der Verlauf der Brems-, Halte- und/oder Rückstellkraft entlang der Schwenkbewegung kann durch die Formgebung der Flanken des Rastvorsprunges sowie dessen Höhe beeinflusst werden. Ein hoher Rastvorsprung, der insbesondere eine starke Auslenkung der Federanordnung bzw. der Feder erzeugt, erzeugt eine hohe Bremskraft. Steile Flanken führen zu einer zur Umschnappstelle hin stark ansteigenden Kraft bzw. nach Überschreiten der Umschnappstelle schnell wieder abfallenden Kraft. Eine weniger steile Flanke erzeugt eine weniger schnell ansteigende oder - hinter der Umschnappstelle - abfallende Kraft. Durch progressiv oder degressiv ansteigende Flanken kann der Verlauf der Bremskraft an die jeweiligen Bedürfnisse angepasst werden.

Bevorzugt sind an der Umschnappstelle, die mit dem sich an oder näher an der Senkrechten zur Auflagefläche ausgerichteten Anschlussteil zusammenwirkt, die Flanken des Rastvorsprunges steiler als an wenigstens einer weiteren Umschnappstelle, die sich entlang der Schwenkbewegung näher an der Auflagefläche bzw. Montageebene befindet. Die steileren Flanken bewirken eine genauer definierte Umschnappstelle, während die weniger steilen Flanken ein allmähliches Steigen der Brems-, Halte- und/oder Rückstellkraft bewirken.

Im Folgenden ist die Erfindung anhand von unterschiedlichen Ausführungsformen mit Bezug auf die Zeichnungen beispielhaft näher erläutert. In den Zeichnungen werden der einfachheitshalber für Elemente, die einander hinsichtlich Funktion und/oder Aufbau entsprechen, dieselben Bezugszeichen verwendet.

Nach Maßgabe der obigen Ausführungen können die bei einer Ausführungsform beschriebenen Merkmale verändert werden. So kann auf ein Merkmal einer Ausführungsform verzichtet werden, auf dessen technischen Effekt es bei einer bestimmten Anwendung nicht ankommt. Umgekehrt kann einer Ausführungsform ein Merkmal, beispielweise ein Merkmal einer weiteren Ausführungsform oder ein oben beschriebenes Merkmal, hinzugefügt werden, wenn es bei einer bestimmten Anwendung auf den technischen Effekt dieses Merkmals ankommen sollte.

Es zeigen:
Fig. 1 eine schematische Vorderansicht einer erfindungsgemäßen Anschlagvorrichtung;
Fig. 2 eine schematische Seitenansicht der Anschlagvorrichtung der Fig. 1;
Fig. 3 eine schematische Seitenansicht eines Sockelteils der Anschlagvorrichtung der Fig. 1;
Fig. 4 einen Schnitt entlang der Linie IV-IV der Fig. 1
Fig. 5 eine schematische Darstellung einer weiteren Anschlagvorrichtung;
Fig. 6 eine schematische Schnittdarstellung entlang der Linie VI-VI der Fig. 5;
Fig. 7 eine schematische Darstellung einer weiteren Anschlagvorrichtung;
Fig. 8 eine schematische Darstellung eines Details der Fig. 7;
Fig. 9 eine schematische Schnittdarstellung einer weiteren Anschlagvorrichtung;
Fig. 10 eine schematische Schnittdarstellung einer weiteren Anschlagvorrichtung;
Fig. 11 eine schematische Schnittdarstellung einer weiteren Anschlagvorrichtung.

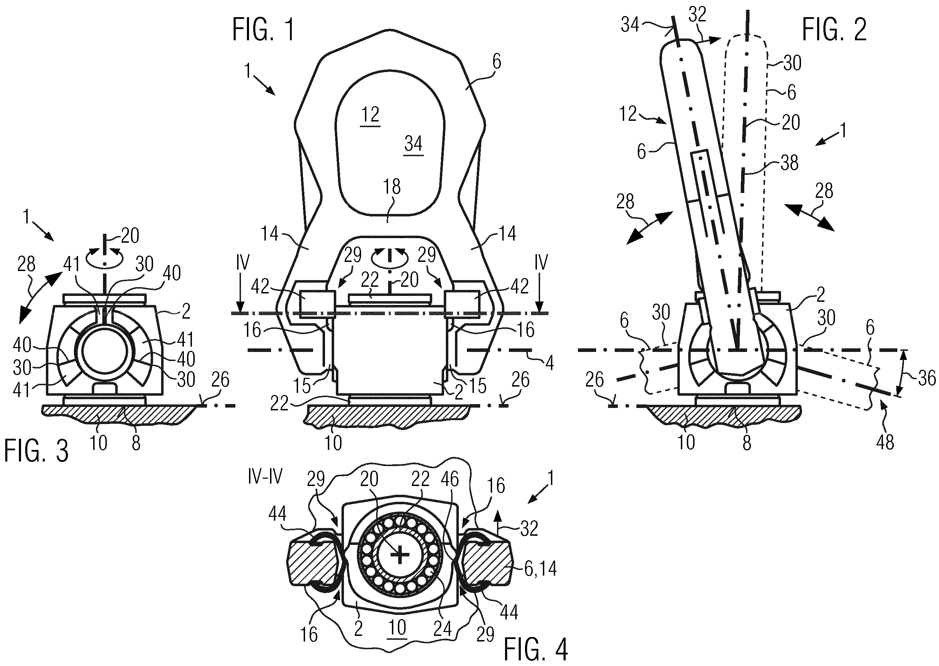

Zunächst werden Aufbau und Funktionen der erfindungsgemäßen Anschlagvorrichtung 1 mit Bezug auf das Ausführungsbeispiel der Fig. 1 und 4 beispielhaft erläutert.

Die Anschlagvorrichtung 1 weist ein Sockelteil 2 und ein um eine Schwenkachse 4 relativ zum Sockelteil 2 schwenkbares und am Sockelteil 2 befestigtes Anschlussteil 6 auf.

Das Sockelteil 2 weist eine Auflagefläche 8 auf, die zur Auflage an einem Gegenstand 10, beispielsweise einer Last oder einer Ladefläche dient.

Das Anschlussteil 6 weist eine Öffnung 12 auf, die zum Anschlagen eines nicht gezeigten Anschlag-, Zurr-, Hege- oder Spannmittels dient. Beispielsweise kann in die Öffnung 12 ein Haken, ein Karabiner, ein Schäkel, ein Seil und/oder ein Gurt eingehängt werden. Das Anschlussteil 6 ist wenigstens in etwa bügelförmig und weist zwei Schenkel 14 auf, die sich von der Schwenkachse 4 und vom Sockelteil 2 weg erstrecken. Die Schenkel 14 liegen sich bezüglich des Sockelteils 2 gegenüber, so dass sich das Sockelteil 2 zwischen den Schenkeln befindet. Am sockelteilseitigen Ende der Schenkel 14 befindet sich jeweils eine Achse oder ein Achsstummel 15, der sich koaxial zur Schwenkachse 4 in das Sockelteil 2 erstreckt.

Zwischen dem Sockelteil 2 und dem Anschlussteil 6 ist jeweils ein Spalt 16 ausgebildet. Gegenüber dem Sockelteil 2 kann die Öffnung 12 durch eine Strebe 18 abgegrenzt sein, die sich von einem Schenkel 14 zum anderen Schenkel 14, vorzugsweise parallel zur Schwenkachse 4 erstreckt.

Das Sockelteil 2 kann gegenüber dem Gegenstand 10 um eine Drehachse 20 drehbar sein, sodass sich das Anschlussteil 1 durch ein Verschwenken der Schwenkachse 4 und ein Verdrehen um die Drehachse 20 entlang einer vom Anschlag-, Hebe-, Zurr- oder Spannmittel aufgebrachten Kraft ausrichten kann. Um die Drehbarkeit gegenüber dem Gegenstand 10 zu gewährleisten, kann die Auflagefläche 8 beispielsweise von einer relativ zum Sockelteil 2 drehbaren Buchse 22 gebildet sein, die das Sockelteil in Richtung der Drehachse 20 wenigstens abschnittsweise durchsetzt. Zwischen der Buchse 22 und dem Sockelteil 2 befindet sich ein Drehlager 24, beispielsweise ein Wälzlager oder Gleitlager. Die Buchse 22 springt bevorzugt an der vom Anschlussteil 6 abgewandten Seite des Sockelteils 2 vor.

Eine von der Auflagefläche 8 festgelegte Montageebene 26 liegt bevorzugt parallel zur Schwenkachse 4 und/oder senkrecht zur Drehachse 20. Die Drehachse 20 verläuft bevorzugt senkrecht zur Schwenkachse 4 und kann insbesondere die Schwenkachse 4 schneiden.

Die Schwenkbewegung des Anschlussteils 6 um die Schwenkachse 4 ist durch die Doppelpfeile 28 dargestellt.

Die Anschlagvorrichtung 1 ist mit einem Schnappmechanismus 29 versehen, der wenigstens eine Umschnappstelle 30, bevorzugt eine Mehrzahl von Umschnappstellen 30 entlang der Schwenkbewegung 28 des Anschlussteils 6 um die Schwenkachse 4 aufweist. An einer Umschnappstelle findet ein Schnappvorgang statt. Im Zuge des Schnappvorgangs erzeugt der Schnappmechanismus 29 entlang der Schwenkbewegung 28 des Anschlussteils um die Schwenkachse 4 vor der Umschnappstelle 30 eine entgegen die Schwenkbewegung 28 gerichtete Bremskraft 32, die in Richtung der Schwenkbewegung 28 hinter der Umschnappstelle 30 verringert ist. Die Verringerung der Bremskraft 32 an der Umschnappstelle kann stetig oder, bevorzugt, unstetig erfolgen. Im Zuge der Verringerung kann in Richtung der Schwenkbewegung 28 hinter der Umschnappstelle 30 die Bremskraft 32 in Richtung der Schwenkbewegung 28 gerichtet sein, sodass an der Umschnappstelle eine Vorzeichenumkehr erfolgt. Alternativ kann sich hinter der Umschnappstelle 30 die Bremskraft sprunghaft verringern, beispielsweise wenigstens in etwa auf Null abfallen.

Bevorzugt liegt die Umschnappstelle 30 an einer Stelle, in der das Anschlussteil 6 wenigstens in etwa senkrecht zur Montageebene 26 ausgerichtet ist. Beispielsweise kann eine von der Öffnung 12 bestimmte Öffnungsebene 34, die bei nicht planer Öffnung 12 eine Ausgleichsebene sein kann, parallel zur oder durch die Drehachse 20 verlaufen. Weitere Umschnappstellen 30 können so angeordnet sein, dass zwischen dem sich an der weiteren Umschnappstelle 30 befindlichen Anschlussteil 6 und der Montageebene 26 ein spitzer Winkel 36 eingeschlossen ist und/oder das Anschlussteil 6 parallel zur Montageebene 26 verläuft. So können beispielweise Umschnappstellen 30 in wenigstens einem Winkel von etwa 60°, 45°, 30°, 0° und/oder -5° bis -30° zur Montageebene vorhanden sein. Bevorzugt befinden sich die Umschnappstellen 30 symmetrisch zu beiden Seiten der Senkrechten 38 auf die Montageebene 26.

Zur Erzeugung der Umschnappstellen 30 weist der Schnappmechanismus 29 der Ausführungsform der Fig. 1 bis 4 an jeder Umschnappstelle 30 einen Rastvorsprung 40 auf. Die Flanken 41 eines Rastvorsprungs 40 können unterschiedlich steil verlaufen. Ebenso können unterschiedliche Rastvorsprünge unterschiedlich steile Flanken aufweisen. Die Höhen der Rastvorsprünge 40 können ebenfalls unterschiedlich sein. Bei dem Ausführungsbeispiel der Fig. 1 bis 4 befinden sich die Rastvorsprünge 40 am Sockelteil 2 und springen im Spalt 16 zum gegenüberliegenden Anschlussteil 6 bzw. dem jeweils gegenüberliegenden Schenkel 14 vor.

Der Schnappmechanismus 29 weist darüber hinaus wenigstens eine Federanordnung 42 auf, die mit dem wenigstens einen Rastvorsprung 40 zumindest zu der Umschnappstelle zusammenwirkt. Beim gezeigten Ausführungsbeispiel befindet sich die Federanordnung 42 am Anschlussteil 6. Die Federanordnung 42 bewegt sich folglich mit dem Anschlussteil 6 entlang der Schwenkbewegung 28. Die Rastvorsprünge 40 sind um die Schwenkachse 4 bevorzugt im gleichen Abstand von der Schwenkachse 4 angeordnet, sodass im Zuge der Schwenkbewegung 28 die Federanordnung 42 die Rastvorsprünge 40 nacheinander überstreicht.

Wie dargestellt, kann an jedem Schenkel 14 eine zum Sockelteil 2, in den Spalt 16 vorspringende Federanordnung 42 vorhanden sein.

Die Federanordnung 42 kann wenigstens eine Feder 44 aufweisen, die wenigstens an der wenigstens einen Umschnappstelle 30 ausgelenkt ist. Die Feder 44 kann das Anschlussteil 6, insbesondere einen Schenkel 14 wenigstens teilweise umgreifen, beispielsweise indem sie als Bügel- oder Klammerfeder ausgestaltet ist. Ein Vorsprung 46 der Feder 44 kann direkt mit den Rastvorsprüngen 40 wechselwirken, indem er an einer Umschnappstelle 30 über die Rastvorsprünge 40 schnappt.

Im Zuge der Schwenkbewegung 28 wird die Federanordnung 42 mit Annäherung an die Umschnappstelle 30 zunehmend durch die Flanken 41 ausgelenkt, sodass eine Abweis- oder Bremskraft 32 erzeugt wird, die der Schwenkbewegung 28 entgegen gerichtet ist. Die Rate, mit der sich die Bremskraft 32 pro Winkeleinheit der Schwenkbewegung 28 aufbaut, wird durch die Steilheit der Flanken 41 bestimmt. Eine flache Flanke 41 baut die Bremskraft 32 über einen größeren Abschnitt der Schwenkbewegung 28 auf als eine steile Flanke. Die Höhe der Bremskraft 32 wird durch die Höhe des Rastvorsprunges 30 bestimmt. Je höher der Rastvorsprung 40 ist, um so höher ist die Bremskraft. Durch den Rastvorsprung 30 und seine Flanken 41 kann eine Reibkraft und/oder Rückstellkraft erzeugt werden, die beide Teil der Bremskraft sind. Die Rückstellkraft unterscheidet sich von der Reibkraft dadurch, dass sie nicht nur die Schwenkbewegung abbremst, sondern darüber hinaus ein entgegen die Schwenkbewegung gerichtetes Rückstellmoment erzeugt. Die Reibkraft dagegen bremst lediglich die Schwenkbewegung ab. Die Rückstellkraft kann durch eine Verformung der Federanordnung parallel zur Schwenkbewegung und/oder Umlenkung der Reibkraft an einer Flanke, die außerhalb des Reibkegels liegt, erzeugt werden.

Bei der dargestellten Ausgestaltung dient der Schnappmechanismus 29 bevorzugt gleichzeitig als Bügelfallbremse, die das Anschlussteil 6 wenigstens unter dessen Eigengewicht beabstandet von der Montageebene 26 halten kann. Dies geschieht dadurch, dass der Rastvorsprung 40 an der wenigstens entsprechenden Umschnappstelle ausreichend hoch ist, um das Fallen des Anschlussteils 6 unter Schwerkrafteinwirkung abzubremsen und vor Erreichen der Montageebene 26 sowie vor dem Umschnappen über die Umschnappstelle 30 anzuhalten.

Um ein Rückfedern zu vermeiden, kann die Flanke 41, welche die Federanordnung 42 entlang der Schwenkbewegung 28 zur Montageebene 26 hin zunehmend auslenkt, geringer geneigt sein als beispielweise die andere Flanke 41, die sich zwischen dem Rastvorsprung 40 und der Montageebene 26 befindet. So ergibt sich ein allmählicher Aufbau der Bremskraft, während die steilen Flanken bei senkrechter Ausrichtung des Anschlussteils einen definierten Umschlagpunkt schaffen, der die übrige Bewgung des Anschlussteils um die Senkrechte herum nur wenig beeinträchtigt.

Die weiteren Umschnappstellen 30, bei denen sich das Anschlussteil parallel oder im spitzen Winkel 36 zur Montageebene 26 befindet, können zudem zum Verrasten des Anschlussteils beispielsweise in eine Nichtgebrauchsstellung 48 genutzt werden, in der der Bügel an der Montageebene 26 bzw. dem Gegenstand 10 anliegt und durch die Umschnappstelle 30 in dieser Stellung verrastet gesichert ist.

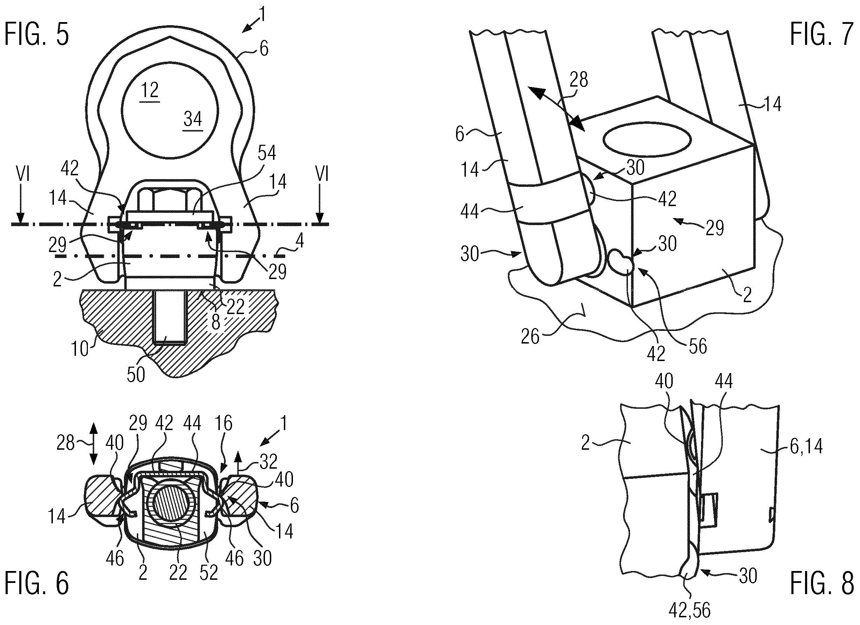

Als nächstes wird das Ausführungsbeispiel der Fig. 5 und 6 beschrieben, wobei der Einfachheit halber lediglich auf die Unterschiede zum vorangegangenen Ausführungsbeispiel eingegangen ist.

So ist beispielsweise beim Ausführungsbeispiel der Fig. 5 ein Befestigungsmittel 50 gezeigt, mit dem die Anschlagvorrichtung 1 am Gegenstand 10 befestigt werden kann. Das Befestigungsmittel 50 ist beispielsweise ein Schraubbolzen, der durch die Buchse 22 gesteckt ist.

Beim Ausführungsbeispiel der Fig. 5 und 6 befindet sich die Federanordnung 42 am Sockelteil 2. Die Feder 44 ist bügelförmig ausgestaltet und weist an zwei jeweils dem Anschlussteil 6 gegenüberliegenden Stellen einen Federvorsprung 46 auf, der mit einem jeweils schenkelseitigen bzw. anschlussteilseitigen Rastvorsprung 40 zusammenwirkt. Die Feder 44 ist im Wesentlichen U-förmig, wobei der Federvorsprung 46 an den beiden Schenkeln ausgebildet ist. Die Federanordnung 42 umgreift das Sockelteil 2 zumindest abschnittsweise. Sie ist unverlierbar am Sockelteil gehalten, beispielsweise in dem sie in einer Tasche 52 des Sockelteils gehalten, die von oben durch ein Oberteil 54 der Buchse verschlossen sein kann.

Bei dieser Ausgestaltung ist lediglich eine einzige Umschnappstelle 30 bei senkrecht zur Auflagefläche 8 ausgerichteten Anschlussteil 6 bzw. ausgerichteter Öffnung 12 oder Öffnungsebene 34 vorhanden.

An der Umschnappstelle schnappen die beiden anschlussteilseitigen Rastvorsprünge 40 im Zuge der Schwenkbewegung 28 über die Federanordnung 42 bzw. die Vorsprünge 46 der Feder 44.

Durch die Verformung der Feder vor Erreichen der Umschnappstelle 30 wird eine Bremskraft 32 vor Erreichen der Umschnappstelle 30 erzeugt. Nach Überschreiten der Umschnappstelle 30 drückt die Feder 44 die Schenkel 14 weg von der Umschnappstelle 30.

Anstelle der in Fig. 5 und 6 dargestellten Variante mit einer U-förmigen Bügelfeder können selbstverständlich auch zwei sockelteilseitige Einzelfedern vorgesehen sein, die jeweils den Schenkeln 14 gegenüber liegen.

Im Übrigen befindet sich bei der Ausführungsform der Fig. 5 und 6 der Schnappmechanismus 29 ebenfalls in dem wenigstens einen Spalt 16 zwischen Anschlussteil 6 und Sockelteil 2.

Bei der Ausgestaltung der Fig. 7 und 8 sind drei Umschnappstellen 30 vorhanden. An jeder Umschnappstelle 30 befindet sich eine Federanordnung 42 in Form eines federnden Druckstückes 56, beispielsweise eines Kugeldruckstiftes, der zumindest teilweise in das Sockelteil 2 eingelassen ist.

Der Schnappmechanismus 29 weist ferner einen Rastvorsprung 40 auf, der hier von einer Klammer- oder Bügelfeder 44 gebildet ist, die jeweils einen der Schenkel 14 des Anschlussteils 6 zumindest abschnittsweise umgreift. Der Rastvorsprung 40 ist bei dieser Ausgestaltung folglich federnd. Alternativ kann der Rastvorsprung 40 wie bei der Ausgestaltung der Fig. 5 und 6 auch starr, beispielweise von einem von Schenkel 14 gebildeten Vorsprung geformt sein. An den Umschnappstellen 30 bewegt sich der Rastvorsprung 40 über die jeweils an dieser Umschnappstelle 30 befindliche Federanordnung 42. Kurz vor den entlang der Schwenkbewegung 28 zur Montageebene 26 hin gelegenen Umschnappstellen 30 wird das Anschlussteil 6 gebremst, wie bei der Ausgestaltung der Fig. 1 bis 4.

Selbstverständlich kann das federnde Druckstück 56 auch am Anschlussteil 6 gegenüber dem Sockelteil 2 angeordnet sein und die Rastvorsprünge 40 am Sockelteil 2. Als weitere Alternative können anstelle der federnden Druckstücke 56 auch massiv aus dem Sockelteil 2 geformte Rastvorsprünge, die beispielsweise kugelförmig sind, vorhanden sein. In diesem Fall ist die Feder 44 Teil der Federanordnung 42.

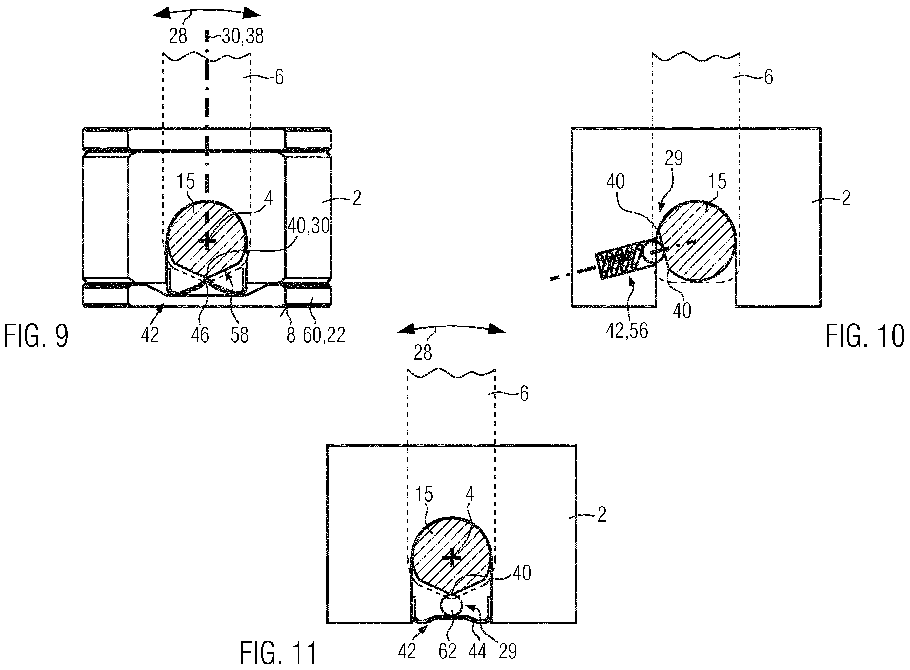

Bei den Ausführungsformen der Fig. 1 bis 8 ist die Federanordnung 42 an der Umschnappstelle im Wesentlichen axial zur Schwenkachse 4 gegenüber dem wenigstens einen Rastvorsprung 40 angeordnet. Bei den Ausführungsformen der Fig. 9 bis 11 liegt dagegen die Federanordnung 42 im Wesentlichen in radialer Richtung dem wenigstens einen Rastvorsprung gegenüber. Dies ermöglicht es, den Schnappmechanismus 29 innerhalb des Sockelteils 2 anzuordnen. Die Anordnung im Sockelteil 2 schützt den Schnappmechanismus 29 vor mechanischer Beschädigung.

Bei der Ausführungsform der Fig. 9 ist die Federanordnung 42 zwischen der der Auflagefläche 8 zugewandten Unterseite 58 des Anschlussteils 6 und der Auflagefläche 8 angeordnet. Die Federanordnung 42 kann zwischen einem unteren Teil 60 des Sockelteils 2, beispielsweise der Buchse 22 und dem Sockelteil 2 verliersicher angebracht sein. Das Anschlussteil 6 weist bei dieser Ausgestaltung beispielsweise an seiner Achse oder seinem Achsstummel 15 wenigstens einen radial zur Schwenkachse 4 vorspringenden Rastvorsprung 40 auf, der mit dem entsprechenden Federvorsprung 46 an der Schnappstelle 30 zusammenwirkt.

Um bei dieser Ausgestaltung entlang der Schwenkbewegung 28 mehrere Umschnappstellen 30 zu schaffen, können entsprechend in Richtung um die Schwenkachse 4 herum am Außenumfang des sich parallel zur Schwenkachse 4 erstreckenden Achsstummel 15 mehrere radiale Rastvorsprünge 40 vorgesehen sein.

Auch hier kann anstelle des Rastvorsprunges 40 am Anschlussteil eine Federanordnung 42 vorgesehen sein, die mit entsprechend radial nach innen vorspringenden Rastvorsprüngen 40 des Sockelteils an den Umschnappstellen 30 zusammenwirkt.

In Fig. 10 ist als Federanordnung 42 ein federndes Druckstück 56 in das Sockelteil 2 eingesetzt. Das federnde Druckstück ist senkrecht bzw. radial zur Schwenkachse 4 ausgerichtet.

Beim Ausführungsbeispiel der Fig. 11 weist der Schnappmechanismus 29 ein Reibelement 62 auf, das sich zwischen der Feder 44 und dem Rastvorsprung 40 befindet. Aufgrund des Reibelements 62 kann auf einen Federvorsprung 46 verzichtet werden, da ein gleichwirkender Vorsprung durch das Reibelement 62 gebildet ist. Das Reibelement 62, beispielweise eine Kugel, kann verliersicher in der Federanordnung 42 gehalten sein. Im Unterschied zum Kugeldruckstift 56 der Fig. 10 ist die Feder 44 eine Blattfeder. Auch hier können entlang der Schwenkbewegung 28 um die Schwenkachse 4 herum mehrere Rastvorsprünge 40 vorhanden sein, um mehrere Umschnappstellen 30 entlang der Schwenkbewegung 28 zu schaffen.

### Bezugszeichen

- 1: Anschlagvorrichtung
- 2: Sockelteil
- 4: Schwenkachse
- 6: Anschlussteil
- 8: Auflagefläche
- 10: Gegenstand
- 12: Öffnung
- 14: Schenkel
- 15: Achse oder Achsstummel
- 16: Spalt
- 18: Strebe
- 20: Drehachse
- 22: Buchse
- 24: Drehlager
- 26: Montageebene
- 28: Schwenkbewegung
- 29: Schnappmechanismus
- 30: Umschnappstelle
- 32: Bremskraft
- 34: Öffnungsebene
- 36: spitzer Winkel
- 38: senkrechte Stellung des Anschlussteils
- 40: Rastvorsprung
- 41: Flanke des Rastvorsprungs
- 42: Federanordnung
- 44: Feder
- 46: Vorsprung der Federanordnung
- 48: Nicht-Gebrauchsstellung
- 50: Befestigungsmittel
- 52: Tasche
- 54: Oberteil der Buchse
- 56: federndes Druckstück
- 58: Unterseite des Anschlussteils
- 60: Unterteil des Sockelteils
- 62: Reibelement

## Patentansprüche

1. Anschlagvorrichtung (1) mit einem Sockelteil (2) zur Anbringung an einem Gegenstand (10) wie einer Last oder Ladefläche, und mit einem am Sockelteil um eine Schwenkachse (4) schwenkbar gegenüber dem Sockelteil gehaltenen Anschlussteil (6), wobei das Sockelteil eine Auflagefläche (8) zur Auflage an dem Gegenstand und das Anschlussteil eine Öffnung (12) zum Anschlagen eines Anschlag-, Hebe-, Zurr- oder Spannmittels aufweist, wobei ein Schnappmechanismus (29) vorgesehen ist, der wenigstens eine Umschnappstelle (30) entlang einer Schwenkbewegung (28) des Anschlussteils (6) um die Schwenkachse (4) aufweist und in Richtung der Schwenkbewegung (28) vor der Umschnappstelle (30) eine entgegen die Schwenkbewegung (28) gerichtete Bremskraft (32) erzeugt, welche Bremskraft (32) in Richtung der Schwenkbewegung (28) hinter der Umschnappstelle verringert ist, **dadurch gekennzeichnet, dass** der Schnappmechanismus (29) das Anschlussteil (6) von der Umschnappstelle (30) abweist, und dass an der Umschnappstelle (30) das Anschlussteil (6) im Wesentlichen senkrecht zur Auflagefläche (8) ausgerichtet ist.

2. Anschlagvorrichtung (1) nach Anspruch 1, **dadurch gekennzeichnet, dass** der Schnappmechanismus (29) wenigstens einen sockelteilseitigen Abschnitt und wenigstens einen anschlussteilseitigen Abschnitt aufweist.

3. Anschlagvorrichtung (1) nach einem der Ansprüche 1 bis 2, **dadurch gekennzeichnet, dass** sich der Schnappmechanismus (29) zumindest teilweise in einem Spalt (16) zwischen dem Anschlussteil (6) und dem Sockelteil (2) befindet.

4. Anschlagvorrichtung (1) nach einem der Ansprüche 1 bis 3, **dadurch gekennzeichnet, dass** die Bremskraft (32) entgegen der Schwenkbewegung (28) zumindest abschnittsweise in Richtung der Schwenkbewegung vor der Umschnappstelle (30) mit abnehmendem Abstand von der Umschnappstelle (30) zunimmt.

5. Anschlagvorrichtung (1) nach einem der Ansprüche 1 bis 4, **dadurch gekennzeichnet, dass** der Schnappmechanismus (29) eine Federanordnung (42) umfasst, die bei Erreichen der Umschnappstelle (30) durch das Anschlussteil (6) stärker ausgelenkt ist als bei von der Umschnappstelle (30) beabstandeten Anschlussteil (6).

6. Anschlagvorrichtung (1) nach Anspruch 5, **dadurch gekennzeichnet, dass** die Federanordnung (42) wenigstens eine Feder (44) aufweist, die das Sockelteil (2) oder das Anschlussteil (6) wenigstens teilweise umgreift.

7. Anschlagvorrichtung (1) nach Anspruch 5 oder 6, **dadurch gekennzeichnet, dass** die Federanordnung (42) einen weg vom Sockelteil (2) hin zum Anschlussteil (6) oder einen weg vom Anschlussteil (6) hin zum Sockelteil (2) vorspringenden Vorsprung (46) aufweist.

8. Anschlagvorrichtung (1) nach einem der Ansprüche 5 bis 7, **dadurch gekennzeichnet, dass** der Schnappmechanismus (29) wenigstens einen Rastvorsprung (40) aufweist, der zumindest an der wenigstens einen Umschnappstelle (30) mit der Federanordnung (42) zusammenwirkt.

9. Anschlagvorrichtung (1) nach Anspruch 8, **dadurch gekennzeichnet, dass** der wenigstens einen Rastvorsprung (40) am Anschlussteil (6) angeordnet ist.

10. Anschlagvorrichtung (1) nach Anspruch 8 oder 9, **dadurch gekennzeichnet, dass** um die Schwenkachse (4) herum eine Mehrzahl von Rastvorsprüngen (40) angeordnet ist.

11. Anschlagvorrichtung (1) nach Anspruch 7 und einem der Ansprüche 8 bis 10, **dadurch gekennzeichnet, dass** zumindest an der wenigstens einen Umschnappstelle (30) der Rastvorsprung (40) und der Vorsprung (46) der Federanordnung (42) unter Auslenkung wenigstens der Federanordnung (42) aneinander liegen.

12. Anschlagvorrichtung (1) nach einem der Ansprüche 1 bis 11, **dadurch gekennzeichnet, dass** an der wenigstens einen weiteren Umschnappstelle (30) das Anschlussteil (6) in einem spitzen Winkel (36) oder parallel zur Auflagefläche (8) ausgerichtet ist.

13. Anschlagvorrichtung (1) nach einem der Ansprüche 1 bis 12, **dadurch gekennzeichnet, dass** an der wenigstens einen weiteren Umschnappstelle (30) das Anschlussteil (6) wenigstens unter seinem Eigengewicht beabstandet von einer von der Auflagefläche (8) aufgespannten Montageebene (26) gehalten ist.

14. Anschlagvorrichtung (1) nach Anspruch 12 oder 13, **dadurch gekennzeichnet, dass** an der wenigstens einen weiteren Umschnappstelle (30) ein Rastvorsprung (40) vorgesehen ist, dessen Flanken (41) weniger steil verlaufen als die Flanken (41) des Rastvorsprungs (40) einer Umschnappstelle für das sich an oder näher an der Senkrechten (38) befindliche Anschlussteil (6).

## Claims

1. A stop device (1) comprising a base part (2) for attachment to an object (10) such as a load or loading surface, and comprising a connecting part (6) held on the base part so as to be pivotable about a pivot axis (4) relative to the base part, wherein the base part has a support surface (8) for support on the object and the connecting part has an opening (12) for attaching stop, lifting, lashing, or tensioning means, wherein a snap mechanism (29) is provided, which includes at least one snap-over point (30) along a pivot movement (28) of the connecting part (6) about the pivot axis (4) and generates, in the direction of the pivot movement (28) before the snap-over point (30), a braking force (32) directed against the pivot movement (28), the braking force (32) being reduced in the direction of the pivot movement (28) behind the snap-over point,
**characterized in that**
the snap mechanism (29) deflects the connecting part (6) away from the snap-over point (30), and
the connecting part (6) is aligned essentially perpendicular to the support surface (8) at the snap-over point (30).

2. The stop device (1) according to claim 1, **characterized in that** the snap mechanism (29) includes at least one portion on the base part side and at least one portion on the connecting part side.

3. The stop device (1) according to any one of claims 1 to 2, **characterized in that** the snap mechanism (29) is located at least partially in a gap (16) between the connecting part (6) and the base part (2).

4. The stop device (1) according to any one of claims 1 to 3, **characterized in that** the braking force (32) increases against the pivot movement (28), at least in sections, in the direction of the pivot movement before the snap-over point (30) with decreasing distance from the snap-over point (30).

5. The stop device (1) according to any one of claims 1 to 4, **characterized in that** the snap mechanism (29) comprises a spring arrangement (42), which, when the connecting part (6) reaches the snap-over point (30), is deflected more strongly than when the connecting part (6) is spaced apart from the snap-over point (30).

6. The stop device (1) according to claim 5, **characterized in that** the spring arrangement (42) includes at least one spring (44) that at least partially surrounds the base part (2) or the connecting part (6).

7. The stop device (1) according to claims 5 or 6, **characterized in that** the spring arrangement (42) includes a projection (46) projecting away from the base part (2) toward the connecting part (6) or projecting away from the connecting part (6) toward the base part (2).

8. The stop device (1) according to any one of claims 5 to 7, **characterized in that** the snap mechanism (29) includes at least one latching projection (40) that interacts with the spring arrangement (42) at least at the at least one snap-over point (30).

9. The stop device (1) according to claim 8, **characterized in that** the at least one latching projection (40) is arranged on the connecting part (6).

10. The stop device (1) according to any one of claims 8 or 9, **characterized in that** a plurality of latching projections (40) is arranged around the pivot axis (4).

11. The stop device (1) according to claim 7 and any one of claims 8 to 10, **characterized in that** at least at the at least one snap-over point (30), the latching projection (40) and the projection (46) of the spring arrangement (42) abut against each other upon deflection of at least the spring arrangement (42).

12. The stop device (1) according to any one of claims 1 to 11, **characterized in that** at the at least one further snap-over point (30), the connecting part (6) is aligned at an acute angle (36) or parallel to the support surface (8).

13. The stop device (1) according to any one of claims 1 to 12, **characterized in that** at the at least one further snap-over point (30), the connecting part (6) is held, at least under its own weight, at a distance from a mounting plane (26) spanned by the support surface (8).

14. The stop device (1) according to any one of claims 12 or 13, **characterized in that** at the at least one further snap-over point (30), a latching projection (40) is provided, the flanks (41) of which are less steep than the flanks (41) of the latching projection (40) of a snap-over point for the connecting part (6) located at or closer to the vertical (38).

## Revendications

1. Dispositif de butée (1) muni d'une partie de socle (2) pour montage sur un objet (10) tel qu'une charge ou une surface de chargement, et d'une partie de raccordement (6) maintenue sur la partie de socle autour en pouvant pivoter autour d'un axe de pivotement (4) par rapport à la partie de socle, dans lequel la partie de socle présente une surface d'appui (8) pour prendre appui sur l'objet et la partie de raccordement présente une ouverture (12) pour la mise en butée d'un moyen de butée, de levage, d'arrimage ou de serrage, dans lequel un mécanisme à déclic (29) est prévu, qui présente au moins une zone de basculement (30) le long d'un mouvement de pivotement (28) de la partie de raccordement (6) autour de l'axe de pivotement (4), et dans la direction du mouvement de pivotement (28) avant la zone de basculement (30) survient une force de freinage (32) orientée à l'encontre du mouvement de pivotement (28), laquelle force de freinage (32) est diminuée dans la direction du mouvement de pivotement (28) derrière la zone de basculement, **caractérisé en ce que** le mécanisme à déclic (29) détourne la partie de raccordement (6) de la zone de basculement (30), et **en ce qu'**au niveau de la zone de basculement (30), la partie de raccordement (6) est orientée sensiblement perpendiculairement à la surface d'appui (8).

2. Dispositif de butée (1) selon la revendication 1, **caractérisé en ce que** le mécanisme à déclic (29) présente au moins une section côté partie de socle et au moins une section côté partie de raccordement.

3. Dispositif de butée (1) selon l'une quelconque des revendications 1 à 2, **caractérisé en ce que** le mécanisme à déclic (29) se trouve au moins partiellement dans un espace (16) entre la partie de raccordement (6) et la partie de socle (2).

4. Dispositif de butée (1) selon l'une quelconque des revendications 1 à 3, **caractérisé en ce que** la force de freinage (32) à l'encontre du mouvement de pivotement (28) augmente au moins par endroits dans la direction du mouvement de pivotement devant la zone de basculement (30) avec une distance décroissante par rapport à la zone de basculement (30).

5. Dispositif de butée (1) selon l'une quelconque des revendications 1 à 4, **caractérisé en ce que** le mécanisme à déclic (29) comprend un agencement à ressort (42) qui, lorsque la partie de raccordement (6) atteint la zone de basculement (30), est déviée plus fortement que lorsque la partie de raccordement (6) est espacée de la zone de basculement (30).

6. Dispositif de butée (1) selon la revendication 5, **caractérisé en ce que** l'agencement à ressort (42) présente au moins un ressort (44) qui entoure au moins partiellement la partie de socle (2) ou la partie de raccordement (6).

7. Dispositif de butée (1) selon la revendication 5 ou 6, **caractérisé en ce que** l'agencement à ressort (42) présente une saillie (46) faisant saillie depuis la partie de socle (2) vers la partie de raccordement (6) ou depuis la partie de raccordement (6) vers la partie de socle (2).

8. Dispositif de butée (1) selon l'une quelconque des revendications 5 à 7, **caractérisé en ce que** le mécanisme à déclic (29) présente au moins une saillie d'encliquetage (40) qui coopère avec l'agencement à ressort (42) au moins au niveau de la au moins une zone de basculement (30).

9. Dispositif de butée (1) selon la revendication 8, **caractérisé en ce que** la au moins une saillie (13a) est agencée au niveau de la partie de raccordement (6).

10. Dispositif de butée (1) selon la revendication 8 ou 9, **caractérisé en ce qu'**une pluralité de saillies d'encliquetage (40) sont agencées autour de l'axe de pivotement (4).

11. Dispositif de butée (1) selon la revendication 7 et l'une quelconque des revendications 8 à 10, **caractérisé en ce qu'**au moins au niveau de la au moins une zone de basculement (30), la saillie d'encliquetage (40) et la saillie (46) de l'agencement à ressort (42) sont adjacentes l'une à l'autre avec une déviation d'au moins l'agencement à ressort (42).

12. Dispositif de butée (1) selon l'une quelconque des revendications 1 à 11, **caractérisé en ce qu'**au niveau de la au moins une zone de basculement supplémentaire (30), la partie de raccordement (6) est orientée sous un angle aigu (36) ou parallèlement par rapport à la surface d'appui (8).

13. Dispositif de butée (1) selon l'une quelconque des revendications 1 à 12, **caractérisée en ce qu'**au niveau de la au moins une zone de basculement supplémentaire (30), la partie de raccordement (6) est maintenue au moins sous son propre poids à distance d'un plan de montage (26) défini par la surface d'appui (8).

14. Dispositif de butée (1) selon la revendication 12 ou 13, **caractérisé en ce qu'**une saillie d'encliquetage (40) est prévue au niveau de la au moins une zone de basculement supplémentaires (30), dont les flancs (41) sont moins raides que les flancs (41) de la saillie d'encliquetage (40) d'une zone de basculement pour la partie de raccordement (6) située au niveau ou plus près de la perpendiculaire (38).
